# EUROPEAN PATENT APPLICATION

(11) **EP 3 206 371 A1**
(43) Date of publication of application: **16.08.2017**
(21) Application number: 14894029.9
(22) Date of filing: 29.12.2014
(51) Int. Cl.: H04L 29/08

(54) **M2M COMMUNICATION ARCHITECTURE AND INFORMATION INTERACTION METHOD AND DEVICE**

(30) Priority: 10.11.2014 CN 201410629176
(71) Applicant: ZTE Corporation, Shenzhen, Guangdong 518057 (CN)
(72) Inventor: SUN, Aifang, Shenzhen Guangdong 518057 (CN)
(74) Representative: HGF Limited
(86) International application number: PCT/CN2014/095408
(87) International publication number: WO 2015/184779

(57) **Abstract**

An M2M communication architecture, information interaction method and apparatus are provided. The M2M communication architecture includes a first terminal side middleware and a second terminal side middleware or a network side middleware connected to the first terminal side middleware, herein the first terminal side middleware or the second terminal side middleware is located between a terminal side application and an underlying network service, the first terminal side middleware or the second terminal side middleware includes a module for resource abstraction and a module for semantic processing; the network side middleware is located between the network side application and the underlying network service, and the network side middleware includes a module for resource abstraction and a module for semantic processing. With embodiments of the present invention, the problem of how to implement interoperability using resource abstraction and semantics in an M2M communication process in the existing technology is solved, thereby improving extendibility and interoperability of the Internet of things system.

## Description

### Technical Field

The present invention relates to the field of communication, and more particularly, to a machine-to-machine (M2M) communication architecture, information interaction method and apparatus.

### Background

Resource abstraction and semantics have been defined explicitly and their roles have been elaborated in oneM2M protocol architecture. Without this resource abstraction, it is still possible to design schemes, develop platforms, deploy terminal devices and conduct the Internet of things services, but whenever a service is developed, the process needs to be repeated once from the beginning to the end, and the system also needs to be modified deep into the code level. In the traditional development mode, developers need to understand details of each access technology and use native device interface to develop applications, thus extendibility and interoperability of an Internet of things system are poor. For the resource abstraction, all known and upcoming physical devices can be represented using a limited abstract model, a device and a platform can be separated, and a resource abstract model can be operated directly when the service is developed on the platform regardless of actual hardware, thereby implementing reuse of the service really. The resource abstraction is a basis of the semantics, and only after an abstract device model is established, the semantic system can be used to better control terminal devices.

However, the existing technology does not explain how to use resource abstraction and semantics in an oneM2M protocol architecture to solve the problem of poor extendibility and interoperability of the Internet of things system.

There is no effective solution yet for the problem of how to implement interoperability using resource abstraction and semantics in an M2M communication process in the existing technology.

### Summary

Embodiments of the present invention provides an M2M communication architecture, an information interaction method and device, to solve at least the problem of how to implement interoperability using resource abstraction and semantics in an M2M communication process in the existing technology.

According to an embodiment of the present invention, there is provided a machine-to-machine (M2M) communication architecture, including: a first terminal side middleware and a second terminal side middleware or a network side middleware connected to the first terminal side middleware, herein the first terminal side middleware or the second terminal side middleware is located between a terminal side application and an underlying network service, and the first terminal side middleware or the second terminal side middleware includes a module for resource abstraction and a module for semantic processing; the network side middleware is located between the network side application and the underlying network service, and the network side middleware includes a module for resource abstraction and a module for semantic processing.

In the present embodiment, the M2M communication architecture further includes: a unified ontology base connected to the module for resource abstraction and the module for semantic processing in a same middleware and used for storing a corresponding relationship between a resource ontology and one or more semantics.

According to another embodiment of the present invention, there is provided an information interaction method, applied to the machine-to-machine (M2M) communication architecture described above and including: the first terminal side middleware or network side middleware receiving instruction information sent by a physical resource; the module for resource abstraction included in the first terminal side middleware or the network side middleware abstracting the physical resource into a corresponding resource ontology; the module for semantic processing included in the first terminal side middleware or the network side middleware determining a semantic corresponding to the instruction information according to the resource ontology and sending the semantic to an M2M correspondent node.

In the present embodiment, the module for semantic processing included in the first terminal side middleware or the network side middleware determining the semantic corresponding to the instruction information according to the resource ontology and sending the semantic to the M2M correspondent node includes: the module for semantic processing included in the first terminal side middleware or the network side middleware selecting the semantic corresponding to the instruction information from the unified ontology base according to the resource ontology and sending the semantic to the M2M correspondent node.

In the present embodiment, when the first terminal side middleware sends the semantic to the M2M correspondent node, the M2M correspondent node includes the network side middleware or the second terminal side middleware; and/or when the network side middleware sends the semantic to the M2M correspondent node, the M2M correspondent node includes the first terminal side middleware or the second terminal side middleware.

According to another embodiment of the present invention, there is further provided an information interaction apparatus, herein the apparatus is located in a terminal side middleware, and the terminal side middleware is located between a terminal side application and an underlying network service, and the apparatus includes: a first receiving module configured to receive instruction information sent by a physical resource; and a first resource abstraction module configured to abstract the physical resource into a corresponding resource ontology; and a first semantic processing module configured to determine a semantic corresponding to the instruction information according to the resource ontology and send the semantic to an M2M correspondent node.

In this embodiment, the apparatus further includes:
a unified ontology base configured to be connected with the first resource abstraction module and the first semantic processing module, and adapted to store a corresponding relationship between the resource ontology and one or more semantics.

In the present embodiment, the first semantic processing module is further configured to select the semantic corresponding to the instruction information from the unified ontology base according to the resource ontology and send the semantic to the M2M correspondent node.

In the present embodiment, the M2M correspondent node includes a network side middleware or the other terminal side middleware, herein the network side middleware is located between a network side application and the underlying network service.

According to still another embodiment of the present invention, there is further provided an information interaction apparatus, herein the apparatus is located in a network side middleware, and the network side middleware is located between a network side application and an underlying network service, the apparatus includes: a second receiving module configured to receive instruction information sent by a physical resource; a second resource abstraction module configured to abstract the physical resource into a corresponding resource ontology; and a second semantic processing module configured to determine a semantic corresponding to the instruction information according to the resource ontology and send the semantic to an M2M correspondent node.

In this embodiment, the apparatus further includes:
a unified ontology base configured to be connected with the first resource abstraction module and the first semantic processing module, and adapted to store a corresponding relationship between the resource ontology and one or more semantics.

In the present embodiment, the second semantic processing module is further configured to select the semantic corresponding to the instruction information from the unified ontology base according to the resource ontology and send the semantic to the M2M correspondent node.

In the present embodiment, the M2M correspondent node includes a terminal side middleware, herein the terminal side middleware is located between a terminal side application and the underlying network service.

An embodiment of the present invention further provides a computer program and a carrier thereof, the computer program includes program instructions, which, when executed by an M2M communication architecture device, enable the device to perform the information interaction method described above.

According to embodiments of the present invention, the M2M communication architecture includes a first terminal side middleware and a second terminal side middleware or a network side middleware connected to the first terminal side middleware, herein the first terminal side middleware or the second terminal side middleware is located between a terminal side application and an underlying network service, the first terminal side middleware or the second terminal side middleware includes a module for resource abstraction and a module for semantic processing; and the network side middleware is located between the network side application and the underlying network service, and the network side middleware includes a module for resource abstraction and a module for semantic processing. Thus, the problem of how to implement interoperability using resource abstraction and semantics in an M2M communication process in the existing technology is solved, a device and a platform can be separated and a resource abstract model can be operated directly when the service is developed on the platform regardless of actual hardware, thereby implementing reuse of the service really and improving extendibility and interoperability of the Internet of things system.

### Brief Description of the Drawings

FIG. 1 is a schematic diagram of an M2M communication architecture according to an embodiment of the present invention.
FIG. 2 is a schematic diagram of an information interaction system according to an embodiment of the present invention.
FIG. 3 is a structural block diagram of an information interaction apparatus according to an embodiment of the present invention.
FIG. 4 is a structural block diagram of another information interaction apparatus according to an embodiment of the present invention.
Fig. 5 is a diagram of a service sharing implementation system based on resource abstraction and semantic processing according to an embodiment of the present invention.
Fig. 6 is a diagram of a service sharing implementation structure based on resource abstraction and semantic processing according to an embodiment of the present invention.
Fig. 7 is a flow chart 1 for implementing service sharing based on resource abstraction and semantic processing according to an embodiment of the present invention.
Fig. 8 is a flow chart 2 for implementing service sharing implementation based on resource abstraction and semantic processing according to an embodiment of the present invention.

### Detailed Description

Embodiments of the present invention will be described in detail below in conjunction with the accompanying drawings. It should be noted that the embodiments in the present application and features of the embodiments can be combined with each other without conflict. Furthermore, although a logical order is shown in a flow chart, in some cases, steps shown or described here may be executed in a different order.

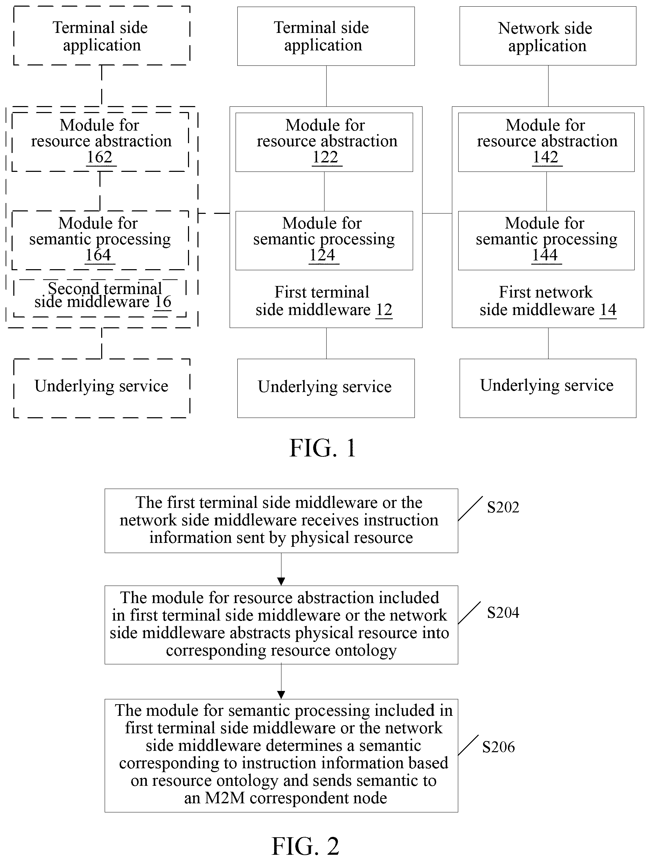

In the present embodiment, a machine-to-machine (M2M) communication architecture is provided. Fig. 1 is a schematic diagram of an M2M communication architecture according to an embodiment of the present invention. As shown in Fig. 1, the M2M communication architecture includes a first terminal side middleware 12 and a second terminal side middleware 16 or a network side middleware 14 connected to the first terminal side middleware.

The first terminal side middleware 12 or the second terminal side middleware 16 is located between a terminal side application and an underlying network service, and the first terminal side middleware 12 or the second terminal side middleware 16 includes a module for resource abstraction 122 or 162 and a module for semantic processing 124 or 164.

The network side middleware 14 is located between the network side application and the underlying network service, and the network side middleware includes a module 142 for resource abstraction and a module 144 for semantic processing.

In the present embodiment, through the communication architecture described above, the problem of how to implement interoperability using resource abstraction and semantics in an M2M communication process in the existing technology is solved, a device and a platform can be separated and a resource abstract model can be operated directly when the service is developed on the platform regardless of actual hardware, thereby implementing reuse of the service really and improving extendibility and interoperability of the Internet of things system.

In the present embodiment, the M2M communication architecture may further include a unified ontology base 18 connected to the module for resource abstraction and the module for semantic processing (e.g., connected to 122 and 124, and/or connected to 142 and 144, and/or connected to 162 and 164) in the same middleware (12, 14, 16) and used for storing a corresponding relationship between a resource ontology and one or more semantics.

In the present embodiment, an information interaction method is provided, applied to the machine-to-machine (M2M) communication architecture described above. FIG. 2 is a flow diagram of an information interaction method according to an embodiment of the present invention. As shown in FIG. 2, the method includes the following steps.

In step S202, the first terminal side middleware or the network side middleware receives instruction information sent by a physical resource.

In step S204, the module for resource abstraction included in the first terminal side middleware or the network side middleware abstracts the physical resource into a corresponding resource ontology.

In step S206, the module for semantic processing included in the first terminal side middleware or the network side middleware determines a semantic corresponding to the instruction information based on the resource ontology and sends the semantic to an M2M correspondent node.

In the present embodiment, through the steps described above, the received instruction information sent by the physical resource is converted into a unified semantic in the M2M communication architecture through resource abstraction and semantic processing for transmission. Thus, the problem of how to implement interoperability using resource abstraction and semantics in an M2M communication process in the existing technology is solved, a device and a platform can be separated and a resource abstract model can be operated directly when the service is developed on the platform regardless of actual hardware, thereby implementing reuse of the service really and improving extendibility and interoperability of the Internet of things system.

In the present embodiment, the module for semantic processing included in the first terminal side middleware or the network side middleware may select the semantic corresponding to the instruction information in the unified ontology base according to the resource ontology, and sends the semantic to the M2M correspondent node.

In the present embodiment, when the first terminal side middleware sends the semantic to the M2M correspondent node, the M2M correspondent node can include the network side middleware or the second terminal side middleware; while when the network side middleware sends the semantic to the M2M correspondent node, M2M correspondent node includes the first terminal side middleware or the second terminal side middleware.

Corresponding to the information interaction method described above, an information interaction apparatus is further provided in the present embodiment. The apparatus is located in a terminal side middleware, the terminal side middleware is located between a terminal side application and an underlying network service, and the apparatus is used for implementing the embodiments described above and alternative embodiments. The contents that have been described will not be repeated. As used below, the term "module" can implement a combination of software and/or hardware with predetermined functions. Although the apparatus described in the following embodiment is preferably implemented by software, hardware or a combination of software and hardware may also be possible and conceived.

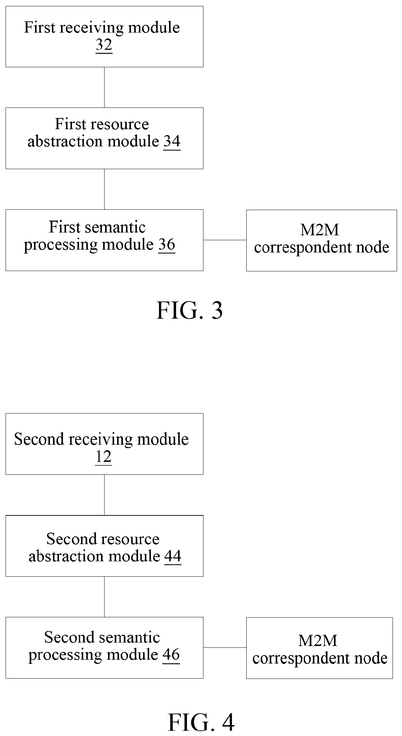

Fig. 3 is a block diagram of an information interaction apparatus according to an embodiment of the present invention, applied to a terminal side middleware including a processor, a program processor and a data processor. As shown in Figure 3, the apparatus includes a first receiving module 32, a first resource abstraction module 34, and a first semantic processing module 36. Each of the modules will be described in detail below.

The first receiving module 32 is adapted to receive instruction information sent by a physical resource; the first resource abstraction module 34 is connected to the first receiving modules 32 and adapted to abstract the physical resource into a corresponding resource ontology; and the first semantic processing module 36 is connected to the first resource abstraction module 34 and adapted to determine a semantic corresponding to the instruction information according to the resource ontology and send the semantic to an M2M correspondent node.

In the present embodiment, the first semantic processing module 36 may also be adapted to select the semantic corresponding to the instruction information from a unified ontology base according to the resource ontology and send the semantic to the M2M correspondent node.

In the present embodiment, the M2M correspondent node includes a network side middleware or the other terminal side middleware, herein the network side middleware is located between the network side application and the underlying network service.

Corresponding to the information interaction method, in the present embodiment, there is provided another information interaction apparatus located in the network side middleware, herein the network side middleware is located between the network side application and the underlying network service, and the network side middleware includes a processor, program memory and data memory. Fig. 4 is a block diagram of another information interaction apparatus according to an embodiment of the present invention. As shown in Fig. 4, the apparatus includes a second receiving module 42, a second resource abstraction module 44, and a second semantic processing module 46. Each of the modules will be described in detail below.

The second receiving module 42 is adapted to receive instruction information sent by a physical resource; the second resource abstraction module 44 is connected to the second receiving module 42 and adapted to abstract the physical resource into a corresponding resource ontology; and the second semantic processing module 46 is connected to the second resource abstraction module 44 and adapted to determine a semantic corresponding to the instruction information based on the resource ontology and send the semantic to an M2M correspondent node.

In the present embodiment, the second semantic processing module 46 may also be adapted to select the semantic corresponding to the instruction information from a unified ontology base according to the resource ontology and send the semantic to the M2M correspondent node.

In the present embodiment, the M2M correspondent node includes a terminal side middleware, the terminal side middleware is located between the terminal side application and the underlying network service.

The following embodiments will be described below in conjunction with the embodiments described above and alternative implementation modes thereof.

In the following alternative embodiments, there is provided a service sharing implementation method based on resource abstraction and semantic processing. In the method, terminal side and network side terminal devices are represented mainly by adding resource abstraction modules to a terminal side middleware and a network side middleware in a oneM2M architecture; and a terminal device is controlled by adding a semantic processing module application semantic system.

The resource abstraction module means that specific physical resources are described abstractly using a resource description template and an abstract resource which has been described abstractly is reported to a unified ontology base through an interface with the unified ontology base; the consistence between a data structure and data presentation needs to be satisfied, and a data exchange mechanism is required to be established to ensure that data exchange can be completed smoothly between different M2M devices and M2M devices and gateways. The resource abstraction module in the terminal side middleware puts particular emphasis on abstraction of terminal device resources; resource abstraction in the network side middleware puts particular emphasis on abstraction of network resources; the resource abstraction in the terminal side middleware cooperates with the resource abstraction in the network side middleware to complete abstraction of resources in the whole OneM2M architecture, while sharing the resource abstract information with the unified ontology base.

The semantic processing module interacts with the unified ontology base, invokes the related semantic processing application programming interface (API), marks up the abstract resource semantically, and processes a semantic query request initiated by an application. In the embodiment of the present invention, the semantic processing module of the terminal side middleware has mainly a proxy function and transmits transparently terminal semantic information to the network side middleware according to user requirement to invoke a semantic processing function of the network side middleware, herein the semantic means that an M2M system manages and invokes uniformly a variety of resources in the network, including implementation of operations, such as creation, lookup, upgrade, association, connection, deletion, etc. A common ontology base is supported to ensure availability of applications in the M2M system. Interconnection and interworking capabilities of different M2M devices are also supported mainly by semantics, herein the ontology means that an ontology technology is used to build a knowledge base of specific services and systems, it can provide unified paradigm, understanding rule and inference method for resource description of general M2M systems, which is conducive to implementing unified standard and analysis for resources between different application entities through the unified ontology base to promote sharing and reuse of the resources. In addition, supports are also provided for general M2M platforms and terminal semantic applications, and semantic resource opening based on the ontology base is implemented.

Through the resource abstraction function of this alternative embodiment, all the different access technologies are abstracted into a unified format, so that developers can develop applications without using a native device interface, and pay much attention to an upper application logic, lowering the threshold for development and promotion; meanwhile, the separation of a device and a platform is implemented, and a resource abstract model can be operated directly when the service is developed on the platform regardless of actual hardware, thereby implementing reuse of the service actually. The resource abstraction is a basis of the semantics, and only after an abstract device model is established, the semantic system can be used to better control terminal devices, the differences between different access network technologies and different terminal information models can be shielded to build a standardized, developed, semantic M2M application development environment and support opening of various services and resources of M2M of wireless mobile networks, thereby implementing sharing of application services.

This alternative embodiment will be further described in detail below in conjunction with the accompanying drawings.

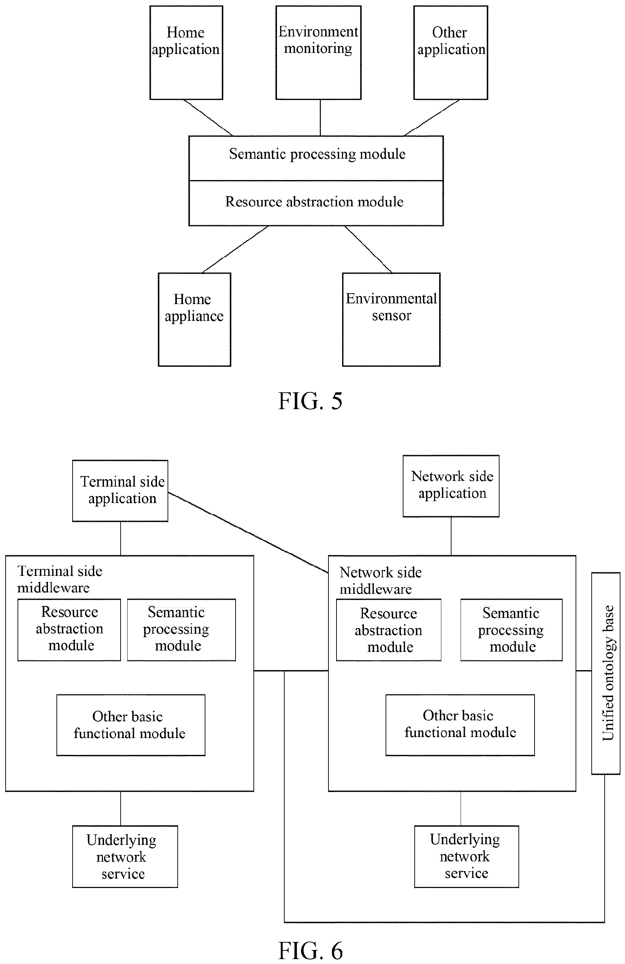

Fig. 5 is a diagram of a service sharing implementation system based on resource abstraction and semantic processing according to an embodiment of the present invention. As shown in Fig. 5, the service sharing implementation system based on resource abstraction and semantic processing includes an application unit, a resource abstraction module, a semantic processing Module, a home appliance unit and an environmental sensor unit.

The application unit includes a home application unit, an environment monitoring unit and other application units.

Corresponding home appliances, environmental sensors, home application units, environmental monitoring units, and other applications in home application are mature technologies and will not repeated herein.

The resource abstraction module describes native devices of different access technologies with a unified template, and shields underlying technical details from developers of upper layers. An abstract object includes, but is not limited to, a parameter and operation of a device, a terminal, a gateway and a network platform. The parameter of the device is a performance parameter of device capability, such as wireless communication mode, etc., and the operation of the device is the capability that the device has, for example, capable of collecting temperature of a sensor, and so on.

The semantic processing module is the meaning of data, and the semantic technology describes the meaning of the data and concept, so that a machine can understand it.

Household appliances in the home or environmental sensors in environmental monitoring can be shared through resource abstraction and information processed semantically, and applications are provided according to demands of various application scenarios.

Fig. 6 is a diagram of a service sharing implementation structure based on resource abstraction and semantic processing according to an embodiment of the present invention. As shown in Fig. 6, the service sharing implementation structure based on resource abstraction and semantic processing includes a terminal side application, a terminal side middleware, an underlying network service, a network side application, a network side middleware and a unified ontology base.

The terminal side application refers to an application of sensing a data acquisition source of an extension network.

The terminal side middleware and the network side middleware include resource abstract modules, semantic processing modules and other basic functional modules.

In the embodiment, the resource abstraction module and the semantic processing module are described with reference to Fig. 5 and will not repeated herein. In the embodiment, terminal device data in the terminal side middleware is processed by the resource abstraction module and the semantic processing module, and is transmitted to the network side middleware according to data formats of terminal side and network side communication protocols. In the embodiment, the terminal device data being processed by the resource abstraction module and the semantic processing module means that the terminal device data is converted into a unified data format recognizable by the unified ontology base in the art through the resource abstraction module and the semantic processing module, and different identifiers of ontologies for different fields in the unified ontology base are added for the converted data through the semantic processing module, and then the data is converted into a data format of a communication protocol required by the terminal side middleware and the network side middleware through other basic functional modules of the terminal side middleware. Identifiers of different ontologies in the unified ontology base are added for the data format.

In the embodiment, the terminal device data processed by the resource abstraction module and the semantic processing module of the terminal side middleware is transmitted to the network side middleware, then analyzed and processed by the other basic functional modules of the network side middleware, and then transmitted to the resource abstraction module and the semantic processing module, and operation, including, but is not limited to, aggregation, reconstruction and sharing, is performed on the device data based on the identifier of the ontology in the terminal device data according to the user service requirements to satisfy the user requirements. At the same time, the resource abstract module and the semantics The processing module of the network side perform the same processing on network resources as the resource abstraction module and the semantic processing module of the terminal side, and the other functional modules in the network side middleware store the processed network resources for use by other users. By shielding different terminal devices of different networks and different network resources only according to the data formats and semantics established by the unified ontology base when the data is invoked, the user can invoke the device data and network resources uniformly according to service requirements to achieve true sharing of service data.

Other basic functional modules include functional modules such as application and service management, communication and forwarding management, registration management, group management, device management, location management, resource discovery, security, data management, event triggering, subscription and notification, and billing functional modules; each of the functional modules has been defined in the oneM2M, and will not be repeated herein.

The underlying network service refers to local area network, such as home appliances and environmental sensors as shown in Fig. 5.

The network side application refers to an application such as family application, environmental monitoring, etc.

Different applications have different ontology libraries, and different ontology libraries of different applications are stored in a unified ontology base module, and the semantic processing module in the network side middleware can invoke the corresponding ontology base at any time according to different application requests for semantic processing.

The services collected by underlying network service according to user requirements are transmitted transparently to the network side middleware through the resource abstraction and semantic processing functional module. The network side middleware receives the processed service information and then performs service information sharing through the resource abstraction and semantic processing functional modules to provide services according to the user requirements.

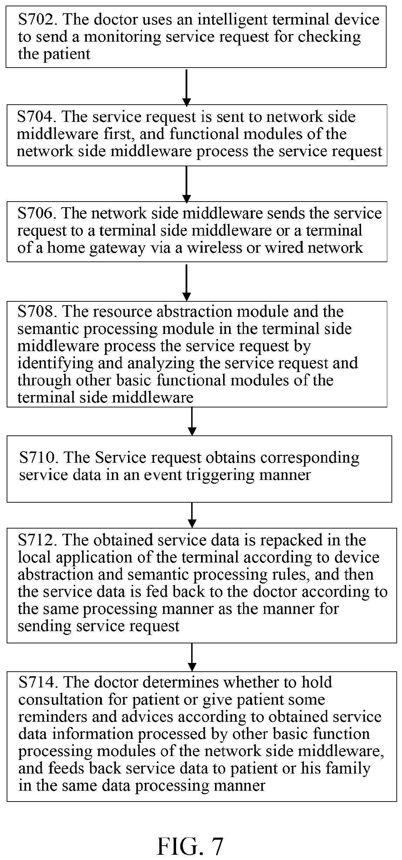

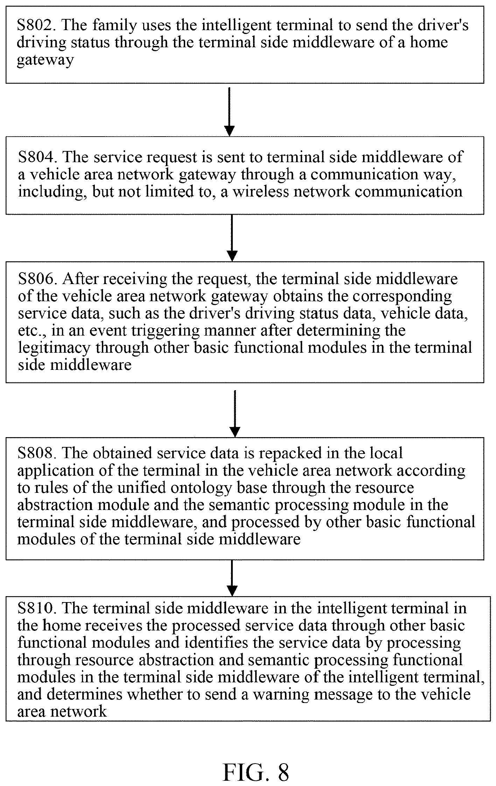

Fig. 7 is a flow chart 1 of a service sharing implementation method based on resource abstraction and semantic processing according to an embodiment of the present invention. Fig. 8 is a flow chart 2 of a service sharing implementation method based on resource abstraction and semantic processing according to an embodiment of the present invention. As shown in Figs. 7 and 8, service sharing will be described in detail in terms of two aspects involved in the present embodiment respectively by taking health supervision and remote monitoring of a vehicle area network as an example. One aspect is information sharing between network side applications and terminal side applications; and the other aspect is service sharing between different terminal side applications in different application scenarios.

### 1) Information sharing between the network side applications and the terminal side applications

### Description of an application scenario

Health supervision: a private doctor monitors and checks health data of a patient from a family, including air temperature and humidity of his living environment, blood pressure and other somatosensory data of his body.

The specific implementation process is as follows.

In S702, the doctor uses an intelligent terminal device to send a monitoring service request for checking the patient; the service request includes, but is not limited to, a technical parameter of the intelligent terminal device, an authentication parameter of the doctor, in addition to temperature and humidity of an environment where the patient is living, blood pressure, heart rate of his body, etc.

In S704, the service request is sent to the network side middleware first, the resource abstraction module and the semantic processing module in the network side middleware process the service request according to a principle established in the unified ontology base, and the processed data is processed into a data format, which can be identified by communication protocols of the network side middleware and the terminal side middleware, through the other basic functional modules in the network side middleware, meanwhile a ontology identifier of a service area of the service request established in the unified ontology base is carried in service request data.

In S706, the network side middleware sends the service request to a terminal side middleware or a terminal of a home gateway via a wireless or wired network.

In S708, the resource abstraction module and the semantic processing module in the terminal side middleware convert the service request into a service request data format, which can be processed locally by the terminal, by identifying and analyzing the service request and through other basic functional modules of the terminal side middleware.

In S710, after the service request is authenticated by the other basic functional modules of the terminal side middleware and confirmed to be a legitimate demand of a legitimate user, the corresponding service data such as temperature and humidity of the environment, blood pressure and heart rate of the body is obtained in an event triggering manner.

In S712, the obtained service data is repacked in the local application of the terminal according to device abstraction and semantic processing rules, and then the service data is fed back to the doctor according to the same processing manner as the manner for sending the service request.

In S714, the doctor determines whether to hold a consultation for the patient or give the patient some reminders and advices (e.g., adjust dosage according to the blood pressure, etc.) according to the obtained service data information processed by other basic function processing modules of the network side middleware. At the same time, the service data will be processed by the resource abstraction module and semantic processing module and stored in a storage functional module in other basic functional modules of the network side middleware, so that the doctor can check it in time or other medical institutions or doctors can check it.

In this application scenario, the service sharing between the network side middleware and the terminal side middleware and the service interaction and sharing between the terminal side middleware and the terminal are involved.

### 2) Service sharing between different terminal side applications in different application scenarios

### Description of an application Scenario

Remote monitoring of the vehicle area network: the family monitors remotely a condition of a vehicle in traveling through an intelligent terminal in home, including the driver's driving status (whether it is fatigue driving, etc.), vehicle data (such as speed, fuel gauge, location, etc.).

The specific implementation process is as follows.

In S802, the family uses the intelligent terminal to send parameters, including but not limited to, technical parameters of the intelligent terminal, authentication parameters of the family, the driver's driving status (whether it is fatigue driving, etc.), vehicle data (such as speed, fuel gauge, location, etc.) through the terminal side middleware of a home gateway and view a service request.

In S804, the service request is sent to a terminal side middleware of a vehicle area network gateway through a communication method, including, but not limited to, a wireless network communication.

In S806, after receiving the request, the terminal side middleware of the vehicle area network gateway obtains the corresponding service data, such as the driver's driving status data, vehicle data, etc., in an event triggering manner after determining the legitimacy of the family and his intelligent terminal through other basic functional modules in the terminal side middleware.

In S808, the obtained service data is repacked in the local application of the terminal in the vehicle area network according to rules of the unified ontology base through the resource abstraction module and the semantic processing module in the terminal side middleware, and encapsulated in a communication protocol data format of a mode of communication between the vehicle area network gateway and the family's intelligent terminal by other basic functional modules of the terminal side middleware, and then is fed back to the family's intelligent terminal carrying an ontology identifier of the service request field specified by the unified ontology base.

In S810, the terminal side middleware in the intelligent terminal in the home receives the processed service data through the other basic functional modules, and identifies the service data by processing through the resource abstraction and semantic processing functional modules in the terminal side middleware of the intelligent terminal. If the family finds that the driver is driving a vehicle tiredly or the detected vehicle data is abnormal, then the family will send a warning message to a terminal device of the vehicle area network, including but not limited to, the driver's warning device, via the intelligent terminal in the same data transmitting manner.

In this application scenario, information interaction between the terminal side middleware and the terminal side middleware is involved, and the service sharing between the terminals are achieved.

In another embodiment, software is further provided and used for carrying out the technical scheme described in the embodiments described above and the alternative embodiments.

In another embodiment, a storage medium is further provided and has the above software stored thereon. The storage medium includes, but is not limited to, a disc, a floppy disk, a hard disk, an erasable memory, etc.

Obviously, it can be understood by those skilled in the art that each module or each step above-mentioned in the present invention can be implemented by the universal calculating apparatus, and they can be integrated in a single calculating apparatus, or distributed in the network consisted of multiple calculating apparatus. Alternatively, they can be implemented by executable program codes of the calculating apparatus. Accordingly, they can be stored in the storage apparatus and implemented by the calculating apparatus, and in some situation, the shown or described steps can be executed according to a sequence different from this place, or they are made into various integrated circuit modules respectively, or multiple modules or steps therein are made into the single integrated circuit module to be implemented. Therefore, the present invention is not limited to any specific combination of hardware and software.

The above description is only alternative embodiments of the present invention and is not intended to limit the present invention, for those ordinarily skilled in the art, the present invention may have various modifications and changes. Any modifications, equivalent replacements and improvements made within the essence and principle of the present invention, should be included within the protection scope of the present invention.

### Industrial Applicability

With the information interaction method and apparatus provided by the embodiments of the present invention, the received instruction information sent by the physical resource is converted into the unified semantic in the M2M communication architecture for transmission through the resource abstraction and semantic processing, thus the problem of how to implement interoperability using resource abstraction and semantics in an M2M communication process in the existing technology is solved, a device and a platform can be separated and a resource abstract model can be operated directly when the service is developed on the platform regardless of actual hardware, thereby implementing reuse of the service really and improving extendibility and interoperability of the Internet of things system.

## Claims

1. A machine-to-machine, M2M, communication architecture, comprising: a first terminal side middleware and a second terminal side middleware or a network side middleware connected to the first terminal side middleware, wherein
the first terminal side middleware or the second terminal side middleware is located between a terminal side application and an underlying network service, and the first terminal side middleware or the second terminal side middleware comprises a module for resource abstraction and a module for semantic processing; and
the network side middleware is located between the network side application and the underlying network service, and the network side middleware comprises a module for resource abstraction and a module for semantic processing.

2. The M2M communication architecture according to claim 1, further comprising:
a unified ontology base, connected to the module for resource abstraction and the module for semantic processing in a same middleware and used for storing a corresponding relationship between a resource ontology and one or more semantics.

3. An information interaction method, applied to the machine-to-machine, M2M, communication architecture according to any one of claims 1 and 2, comprising:
receiving, by the first terminal side middleware or the network side middleware, instruction information sent by a physical resource;
abstracting, by the module for resource abstraction contained in the first terminal side middleware or the network side middleware, the physical resource into a corresponding resource ontology;
determining, by the module for semantic processing contained in the first terminal side middleware or the network side middleware, a semantic corresponding to the instruction information according to the resource ontology, and sending the semantic to an M2M correspondent node.

4. The method according to claim 3, wherein determining, by the module for semantic processing contained in the first terminal side middleware or the network side middleware, the semantic corresponding to the instruction information according to the resource ontology and sending the semantic to the M2M correspondent node comprises:
selecting, by the module for semantic processing contained in the first terminal side middleware or the network side middleware, the semantic corresponding to the instruction information from the unified ontology base according to the resource ontology, and sending the semantic to the M2M correspondent node.

5. The method according to claim 3 or 4, wherein
when the first terminal side middleware sends the semantic to the M2M correspondent node, the M2M correspondent node comprises the network side middleware or the second terminal side middleware; and/or
when the network side middleware sends the semantic to the M2M correspondent node, the M2M correspondent node comprises the first terminal side middleware or the second terminal side middleware.

6. An information interaction apparatus, wherein the apparatus is located in a terminal side middleware, and the terminal side middleware is located between a terminal side application and an underlying network service, and the apparatus comprises:
a first receiving module configured to receive instruction information sent by a physical resource;
a first resource abstraction module configured to abstract the physical resource into a corresponding resource ontology; and
a first semantic processing module configured to determine a semantic corresponding to the instruction information according to the resource ontology and send the semantic to an M2M correspondent node.

7. The apparatus according to claim 6, further comprising:
a unified ontology base configured to be connected with the first resource abstraction module and the first semantic processing module, and adapted to store a corresponding relationship between the resource ontology and one or more semantics.

8. The apparatus according to claim 7, wherein the first semantic processing module is further configured to select the semantic corresponding to the instruction information from the unified ontology base according to the resource ontology and send the semantic to the M2M correspondent node.

9. The apparatus according to claim 6, 7 or 8, wherein the M2M correspondent node comprises a network side middleware or the other terminal side middleware, wherein the network side middleware is located between a network side application and the underlying network service.

10. An information interaction apparatus, wherein the apparatus is located in a network side middleware, and the network side middleware is located between a network side application and an underlying network service, the apparatus comprises:
a second receiving module configured to receive instruction information sent by a physical resource;
a second resource abstraction module configured to abstract the physical resource into a corresponding resource ontology; and
a second semantic processing module configured to determine a semantic corresponding to the instruction information according to the resource ontology and send the semantic to an M2M correspondent node.

11. The apparatus according to claim 10, further comprising:
a unified ontology base configured to be connected with the first resource abstraction module and the first semantic processing module, and adapted to store a corresponding relationship between the resource ontology and one or more semantics.

12. The apparatus according to claim 11, wherein the second semantic processing module is further configured to select the semantic corresponding to the instruction information from the unified ontology base according to the resource ontology and send the semantic to the M2M correspondent node.

13. The apparatus according to claim 10, 11 or 12, wherein the M2M correspondent node comprises a terminal side middleware, wherein the terminal side middleware is located between a terminal side application and the underlying network service.

14. A computer program comprising program instructions, which, when executed by an M2M communication architecture device, enable the device to perform the method according to any one of claims 3-5.

15. A carrier carrying the computer program of claim 14.
